# EUROPEAN PATENT APPLICATION

(11) **EP 2 950 233 A1**
(43) Date of publication of application: **02.12.2015**
(21) Application number: 14170054.2
(22) Date of filing: 27.05.2014
(51) Int. Cl.: G06F 21/86

(54) **Hardware integrity protection**

(71) Applicant: Nokia Solutions and Networks Oy, 02610 Espoo (FI)
(72) Inventor: Schaefer, Manfred, 85661 Forstinning (DE); Orkopoulos, Stawros, 89075 Ulm (DE); De Nys, Erwin, 2200 Herentals (BE)
(74) Representative: Borgström, Markus

(57) **Abstract**

There are provided measures for hardware integrity protection. Such measures exemplarily comprise providing a protection device, comprising holding means configured to hold two separable components and to release said two separable components, and storing means configured to store information indicative of validity of said protection device, wherein said holding means is configured to, upon releasing said two separable components, irreversibly neutralize said information.

## Description

### Field

The present invention relates to telecommunication systems, in particular to hardware integrity protection. More specifically, the present invention exemplarily relates to measures (including methods, apparatuses and computer program products) for realizing hardware integrity protection.

### Background

The present specification generally relates to hardware integrity assurance via active tamper evidence and detection mechanisms.

Telecommunication systems have to meet high security standards to protect user privacy and operator assets by preventing eavesdropping, misuse, and any unauthorized modification of user and network data. Often sensitive parts of such telecommunication system are exposed to the public (e.g., base stations in general, in particular evolved NodeBs (eNB), and small cells) or even private domains (e.g., digital subscriber line (DSL) routers, home (e)NBs (H(e)NB)), and thus are much more prone to attacks than ever. Moreover, such systems increasingly become part of critical infrastructures and thus, may be exposed to stronger and highly motivated attacks.

Other risks may come from unauthorized or improper tampering/handling in service, unwittingly or due to missing know-how disabling or unfolding manufacturer-made secrets or security mechanisms. In addition, from a legal point of view, any unauthorized attempt to manipulate a system would lead to loss of warranty, and thus should be detectable in reliable manner. While in normal operation many of relevant security threats can be prevented by proper system design, the major risks come with physical access and tampering at hardware level. Often systems cannot self-defend manipulations at physical level, either due to lack of appropriate (active) tamper detection and prevention mechanisms caused by the environmental conditions such mechanism have to withstand over the lifetime of a telecommunication product (e.g., outdoor conditions, loss of energy in attack case, lifetime > 10 years), or simply due to involved implementation costs.

In particular, when looking into Long Term Evolution (LTE) 3^{rd} Generation Partnership Project (3GPP) security standards such as technical specification (TS) 33.401 (for eNBs) or TS 33.320 (for H(e)NBs), it becomes quite evident that efficient hardware (HW) integrity protection ("Secure Environment") is very beneficial to protect secrets and data of NodeBs. Due to the flat LTE architecture these network elements (NE) have become more threatened, as they serve as terminating endpoints for over-the-air encryption of the user traffic and also for security relations towards the backhaul.

Hence, in general, suitable mechanisms for detection of tampering of threatened network elements are necessary.

There are many tamper evidence seals or even tamper prevention approaches offered. Many of the solutions (e.g. stickers, tapes, holograms stuck onto the surface of a casing) need human/visual inspection. Even if it is imaginable to enable machine-readability via an additional camera or sensor (laser scanner) monitoring a specific tamper evidence seal, such approach would be too costly and not reliable enough, as the camera/scanner could be easily bypassed or deceived (either on optical or on signal level).

Tamper prevention approaches provide kind of lock functionality realized by mechanical appliances, which cannot be broken without leaving traces of an attack. However, (once such a locking-seal is broken) tamper evidence is only provided by visual inspection. Similarly, there are fluids/films/finishing known which are applied to a surface, and which make traces of an attack visible. These approaches may cause additional problems when applied to telecommunication equipment, as they may not withstand the conditions when exposed to harsh environment (for instance, scratches or small surface-damages could happen by normal treatment of such equipment, e.g., via transport, assembly or cleaning services).

There are also so-called electronic seals mainly designed to be applied in truck/traffic/cargo systems, which are huge in size and quite complex in nature. Often these seals cooperate with external services (such as global positioning system (GPS) or mobile networks), making such solution very dependent from specific communication networks. None of these electronic seals is functional when electrical energy is lost, i.e. in such cases tampering events are not detected.

None of the solutions mentioned so far is relying on cryptographic mechanisms and such approaches are not designed to actively protect specific computer hardware.

Also, there are radio frequency identification (RFID) solutions known, which in most cases are used as identity tags. Such tags are not specifically designed as tamper evidence devices. However, some tamper evidence solutions integrate RFID, but mainly to make the identification machine-readable, and in combination with mechanically destructive mechanisms (such as cable ties or object stickers). Here the mechanical fixing may be destroyed on a tampering event (this is only detectable via visual control), but the RFID functionality as such remains usable.

Moreover, there are known Federal Information Processing Standards (FIPS) -140 compliant devices, which at module and chip level may implement tamper evidence/resistance. Often this is done with high-integration (holding the security system in silicon) and strong physical shielding, e.g., via hardened casings, epoxy resin covered components or modules, thin wires shielding sensitive areas; or methods at chip level (mechanisms in silicon and wiring layers, such as X-Ray protection or fuddling metal layers), such as known from integrated circuit card (ICC) products and other security hardware. In addition, hardware security module (HSM) modules are designed to protect themselves, but not to protect an external system or element.

Hence, the problem may arise that active tamper evidence and/or detection mechanisms are missing, which enable either self-protection of a system against physical attacks or provide means to remotely detect such tampering events.

Hence, there may be a need to provide for hardware integrity protection.

### Summary

Various exemplary embodiments of the present invention aim at addressing at least part of the above issues and/or problems and drawbacks.

Various aspects of exemplary embodiments of the present invention are set out in the appended claims.

According to an exemplary aspect of the present invention, there is provided a protection device, comprising holding means configured to hold two separable components and to release said two separable components, and storing means configured to store information indicative of validity of said protection device, wherein said holding means is configured to, upon releasing said two separable components, irreversibly neutralize said information.

According to an exemplary aspect of the present invention, there is provided a protection system, comprising a protected element, a protection device with holding means configured to hold two separable components and to release said two separable components and storing means configured to store information indicative of validity of said protection device, wherein said holding means is configured to, upon releasing said two separable components, irreversibly neutralize said information, and said protection system further comprising said two separable components configured to cover said protected element in an unseparated state and to uncover said protected element in a separated state.

Any one of the above aspects enables an efficient solution of at least part of the problems and drawbacks identified in relation to the prior art. In particular, any one of the above aspects meets requirements for active tamper detection mechanisms which are drawn up below.

By way of exemplary embodiments of the present invention, there is provided hardware integrity protection. More specifically, by way of exemplary embodiments of the present invention, there are provided measures and mechanisms for realizing hardware integrity protection.

Thus, improvement is achieved by methods, apparatuses and computer program products enabling/realizing hardware integrity protection.

### Brief description of the drawings

In the following, the present invention will be described in greater detail by way of non-limiting examples with reference to the accompanying drawings, in which
Fig. 1 is a schematic diagram illustrating an overview of components of the system according to exemplary embodiments of the present invention,
Fig. 2 is a block diagram schematically illustrating an apparatus according to exemplary embodiments of the present invention,
Fig. 3 is a block diagram schematically illustrating a system according to exemplary embodiments of the present invention,
Fig. 4 is a schematic diagram illustrating a system according to exemplary embodiments of the present invention,
Fig. 5 is a schematic diagram illustrating a security process according to exemplary embodiments of the present invention,
Fig. 6 is a schematic diagram illustrating an apparatus according to exemplary embodiments of the present invention,
Fig. 7 is a schematic diagram illustrating a system according to exemplary embodiments of the present invention,
Fig. 8 is a schematic diagram illustrating a system according to exemplary embodiments of the present invention,
Fig. 9 is a schematic diagram illustrating a security process according to exemplary embodiments of the present invention, and
Fig. 10 is a schematic diagram illustrating an apparatus according to exemplary embodiments of the present invention,
Fig. 11 is a schematic diagram illustrating a system according to exemplary embodiments of the present invention.

### Detailed description of drawings and embodiments of the present invention

The present invention is described herein with reference to particular nonlimiting examples and to what are presently considered to be conceivable embodiments of the present invention. A person skilled in the art will appreciate that the invention is by no means limited to these examples, and may be more broadly applied.

Hereinafter, various embodiments and implementations of the present invention and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to exemplary embodiments of the present invention, in general terms, there are provided measures and mechanisms for (enabling/realizing) hardware integrity protection.

Above mentioned requirements for tamper evidence mechanisms may particularly include the following.

Protection/detection of physical access of any hardware, firmware and software, which is related to the reliable and secure operation of a telecommunication system, is to be achieved.

Further, tampering events are to be machine-readable/detectable.

Furthermore, corresponding mechanisms have to exhibit long-term availability and reliability.

Such mechanisms must sustain environmental conditions of outdoor or indoor telecommunication equipment (e.g., industrial temperature range, weather impacts, lightning-protection, vibration, dust and compliance to intrusion protection (IP) guidelines in general).

A guaranty of functionality even in case (electrical) energy is lost is also demanded.

Further, such mechanism has to cause only low costs (for implementation, production and service), and shall be small-sized to enable implementation also in cases, in which not much space is available (e.g., indoor equipment, small cells, DSL router, HeNBs, or even user equipment (UE) devices).

The mechanisms have to be suitable to withstand attacks against the tamper detection mechanisms themselves or bypassing thereof, preferably cryptographic mechanisms should be applied to achieve a sufficient security level.

Furthermore, practicability for authorized services, for example for maintenance and factory-refurbish, is demanded.

According to exemplary embodiments of the present invention, requirements for active tamper detection mechanisms are met. The solutions according to the present invention are referred to as active tamper seals (ATS). Variants of ATS are based on the following set of common principles.

ATS protects specific and individual physical observation points, such as a cut-off line in a casing/housing, a door in general, boards plugged into a slot or similar (ATS is not a gas or liquid, which is sensitive to changes of the volume). Such physical observation points represent essential barriers that need to be surmounted to get access to the protected elements, which, for instance, are located inside a housing/box/casing. Telecommunication equipment, in particular for radio access network (RAN) (indoor and outdoor usage) is always enclosed in casings/housings (i.e., electromagnetically (EM) shielded and IP compliant boxes (for example, metal boxes)). Accordingly, for RAN products, ATS mounted at box level may provide most benefit.

ATS relies on cryptographic mechanisms to achieve a high (and potentially scalable) level of protection for the ATS mechanisms themselves.

ATS provides observation (=tamper detection) capabilities over an entire product life or service cycle and remains functional even if permanent electrical energy is absent (that means: accumulator/battery/capacitor is not needed, neither for tamper detection nor to record a detected event). ATS may obtain the energy needed to set a tamper detection state from an activity (unwanted or intended, attempted or completed, etc.) itself.

ATS can be (re-)set into an observing state only via an authorized operation. This operation requires mentioned cryptographic mechanisms. ATS related security is designed to fulfil major security requirements, particularly on authorization to create ATS token and to prevent sensitive ATS elements from being re-used (after a tamper event) or cloned/emulated by another device.

ATS' are specific to the system they protect, i.e. they are personalized by holding cryptographically protected data, which is associated with an individual system. Thus, an ATS cannot be applied for a system it has not been initialized for. From security point of view this prevents any kind of class-breaking attacks (attacks, which are successful for all systems using a specific protection mechanism).

ATS' are specifically designed to integrate with authorized services, such as provided by factory or service personnel.

Sensitive ATS components may be designed so that they are neither accessible nor visible for an attacker prior to the attack. After the attack, sensitive ATS components may be accessible, but are protected against manipulation of their state (which then is "tampering event detected").

ATS provides secure communication mechanisms (based on cryptography) either to the protected system itself or to another system, which both are used to remotely report the detected events and/or to react accordingly. Such reactions may include
- creation of not erasable logging data and alerts send to external system,
- deletion of essential secrets/credentials needed to network (NW) communication,
- denial to decrypt essential firmware/software (FW/SW) or configuration data,
- denial to accept updates/extensions for firmware/software or configuration data,
- blocking of testing capabilities and/or FW/SW updates,
- blocking of boot process,
- blocking of Telco services or network element (NE) specific features (licensed add-ons), etc.

Further, ATS' are designed to withstand the environmental conditions and IP guidelines as applicable to outdoor/indoor telecommunication equipment.

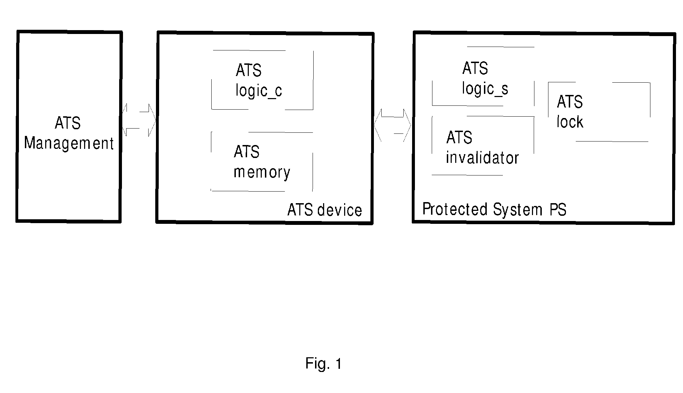

Fig. 1 is a schematic diagram illustrating an overview of components of the system according to exemplary embodiments of the present invention.

In particular, Fig. 1 shows typical components an ATS solution according to exemplary embodiments of the present invention comprises.

The ATS device according to Fig. 1 may be an active unit (like a chip), which may contain some control and communication logic (logic_c) and memory (ATS memory). The ATS device is equipped with an above introduced ATS token. A protected system (PS) according to Fig. 1 may communicate with the ATS (device), particularly for validation and invalidation of the ATS device (or ATS token, respectively). An ATS management according to Fig. 1 translates to an infrastructure which is needed to create valid ATS tokens in an authorized manner. Without ATS management no valid ATS tokens (i.e. no ATS devices with valid ATS token) can be realized.

The overall processes supported by an ATS based approach typically comprises of the following life-cycles:
P0: Initializing the ATS system; typically this is done in factory environment and following factory-controlled processes.
P1: Waiting for a tampering event ("observing state").
P2: Catching/detecting a tampering event.
P3: Persistently recording P1 (i.e., the tampering event).
P4: Reaction on P1 or P2, depending on requirements and possibilities for realization.
P5: Re-setting the ATS system via an authorized mechanism (returning to P1).
P1: ...

Specifically, ATS mechanisms according to exemplary embodiments of the present invention may require several components interacting with each other, such as depicted in Fig. 1, for a typical set-up.

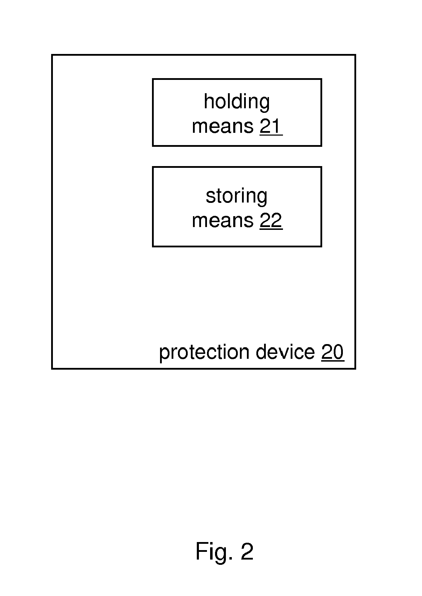

Fig. 2 is a block diagram schematically illustrating an apparatus according to exemplary embodiments of the present invention.

The apparatus may be a protection device, comprising holding means 21 and storing means 22. The holding means 21 holds two separable components. The holding means 21 is further adapted to release said two separable components. The storing means 22 stores information indicative of validity of said protection device. Further, upon releasing said two separable components, the holding means 21 irreversibly neutralizes said information.

According to a variation of the apparatus shown in Fig. 2, according to exemplary embodiments of the present invention, said information is furnished with a security signature.

According to a variation of the apparatus shown in Fig. 2, according to exemplary embodiments of the present invention, said information is cryptographically protected.

According to a variation of the apparatus shown in Fig. 2, according to exemplary embodiments of the present invention, said validity of said protection device is restorable by installing new information indicative of said validity.

As is apparent from the present description, the protection device is restorable by authorized entities which have the technical capability of installing such information indicative of validity. Namely, only authorized entities are able to create the new information indicative of said validity. In particular, only authorized entities have secret data available necessary for creating information indicative of validity. Consequently, only the authorized entities have information indicative of said validity available and thus, only authorized entities are able to install said information indicative of said validity for restoring the validity.

Accordingly, said information indicative of said validity (both the initially stored information as well as the information newly installed for restoring) is generated by an authorized entity using secret data.

According to a variation of the apparatus shown in Fig. 2, according to exemplary embodiments of the present invention, the protection device may further comprise communicating means, which may communicate data based on said information.

According to a variation of the apparatus shown in Fig. 2, according to exemplary embodiments of the present invention, said holding means may comprise a movable engaging portion, an engagement counterpart portion, an electric supply contact, which receives electric energy, an unlock means, which moves said engaging portion to disengage from said engagement counterpart portion upon receipt of said electric energy, and a resetting means, which moves said engaging portion to engage with said engagement counterpart portion.

According to a variation of the apparatus shown in Fig. 2, according to exemplary embodiments of the present invention, said holding means may delete said information using said received electric energy.

According to a variation of the apparatus shown in Fig. 2, according to exemplary embodiments of the present invention, said holding means may delete said information before disengaging said engagement portion from said engagement counterpart portion.

According to a variation of the apparatus shown in Fig. 2, according to exemplary embodiments of the present invention, said holding means may comprise a first portion, which supports said storing means, and a second portion movable with respect to said first portion and capable of contacting said storing means.

According to a variation of the apparatus shown in Fig. 2, according to exemplary embodiments of the present invention, said first portion, said second portion, and said storing means are arranged such that upon movement of said second portion with respect to said first portion said storing means is mechanically destroyed.

According to a variation of the apparatus shown in Fig. 2, according to exemplary embodiments of the present invention, said storing means is mechanically destroyed by means of at least one of torsion of said storing means, over-bending said storing means, punching said storing means, stretching said storing means, pulling said storing means, splitting said storing means, and scissoring said storing means. It is to be understood that the storing means can be mechanically destroyed by other processes too, and the present invention is not limited to the mentioned processes. To the contrary, the given processes are given as examples, and other processes like e.g. slabbing or smashing can be applied to the storing means as long as the storing means is mechanically destroyed.

According to a variation of the apparatus shown in Fig. 2, according to exemplary embodiments of the present invention, said first portion and second portion are bound to said two separate components, respectively.

According to a variation of the apparatus shown in Fig. 2, according to exemplary embodiments of the present invention, said storing means is a radio frequency identification logic.

According to a variation of the apparatus shown in Fig. 2, according to exemplary embodiments of the present invention, said first portion is a bottom layer of a sticker, said second portion is a top layer of said sticker, a first part of said memory portion is glued to the bottom layer, and a second part of said memory is glued to the top layer.

According to a variation of the apparatus shown in Fig. 2, according to exemplary embodiments of the present invention, said holding means may further comprise a piezo-electric element which, upon releasing said two separable components, generates electric energy.

According to a variation of the apparatus shown in Fig. 2, according to exemplary embodiments of the present invention, said holding means may conduct said generated electric energy to said storing means, and said storing means is electrically destructable by said generated electric energy.

According to a variation of the apparatus shown in Fig. 2, according to exemplary embodiments of the present invention, said holding means may further comprise an energy storage, which stores said generated electric energy, and a controller, which generates a predetermined voltage utilizing said stored electric energy. The holding means may delete said information using said predetermined voltage.

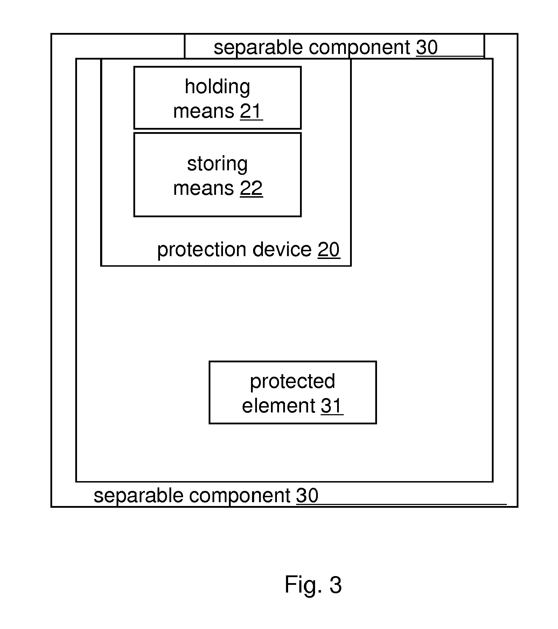

Fig. 3 is a block diagram schematically illustrating a system according to exemplary embodiments of the present invention.

The system is a protection system comprising a protected element 31, a protection device (see Fig. 2), and two separable components 30. The two separable components 30 cover said protected element in an unseparated state and uncover said protected element in a separated state.

According to a variation of the system shown in Fig. 3, according to exemplary embodiments of the present invention, said protected element 31 may comprise a validation means, which may communicate with said protection device, detect tampering of said protection device based on said communication, and control security reactions upon detection of said tampering.

According to a variation of the system shown in Fig. 3, according to exemplary embodiments of the present invention, the system may further comprise a reporting means, which reports said detection of said tampering.

According to a variation of the apparatus shown in Fig. 2, according to exemplary embodiments of the present invention, said two separable components 30 may be a casing and a casing door, respectively, and said protected element is arranged within said casing, or said two separable components 30 may be a rack and a slide-in module, respectively, and said protected element is arranged on said slide-in module.

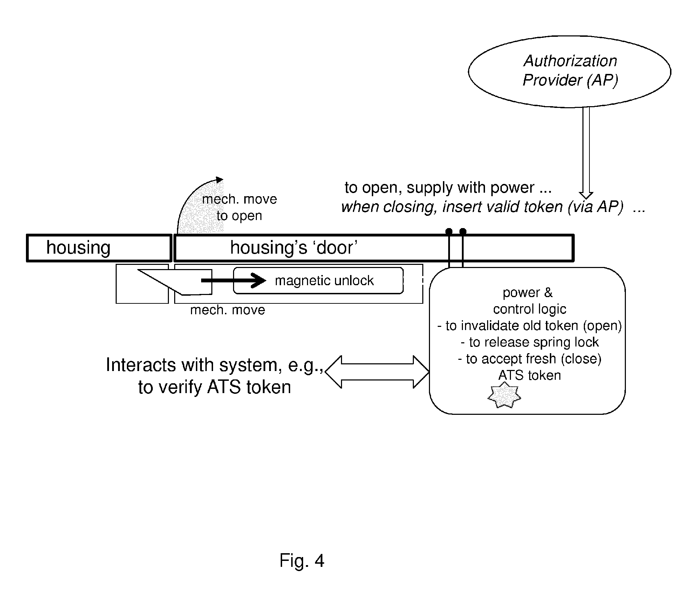

Specific exemplary embodiments of the present invention are explained in more detail below with reference to Figures 4 to 10.

Preparatory, some general security requirements for ATS according to exemplary embodiments of the present invention are shortly discussed below.

Namely, the following assumptions (requirements) are made for ATS according to the present invention:
1. ATS contains unique and individual, signed token, which shall be bound to
   (a) units in casing, e.g., using serial number and/or other individual data;
   (b) authorized service (e.g., signature with private key or authentification signing service); and/or
   (c) optional other data, such as time stamp, change-log/identifier, etc.
2. Token shall be copy(read)-protected by physical or digital means (cryptography).
3. Token shall be invalidated when opening the housing, cutting off a line, plugging out a board, or similar, i.e. when surmounting above mentioned physical observation points to get access to the protected elements (electrical or mechanical destruction).
4. Token shall be verifiable in an electronic way (e.g. via RSA signature) by
   (a) internal logic (individual data stored in unit must be machine-readable (e.g., serial number));
   (b) authorized service during unit inspection (human-readable is sufficient);
   (c) remotely, by a inquiring entity, e.g., an operations and maintenance (OAM) system in network or test equipment in service environment.
5. ATS itself shall be copy-protected (i.e., it must not be possible to clone an existing ATS holding a valid ATS token (mechanical destruction:
   assumption is, that the ATS can not be removed from casing without destroying the internal data (token))).
6. ATS logic shall store and/or process the token according to required security (in particular related to items 2 and 5)
   (a) only memory (read protection): risk is that the token can be read out, e.g., via galvanic interface if not completely destroyed, or via some manipulation of the ATS-unit interface; for RFID-like interface, risk of unauthorized reading and cloning (new ATS) may be high; signed tokens must never be stored outside (e.g. in the system's storage);
   (b) memory and crypto logic (read and replay-protection): on request token can be transmitted in freshly secured way (challenge and response protocol, a cryptographic protocol designed to prevent replay attacks); needs verifier-to-ATS authentication; protocol could be extended to support ATS-based verification to remote challenger (network management system), would immunize against hardware/software manipulation in unit itself;
   (c) it is assumed that the memory in ATS itself can not be read/inspected with reasonable efforts (e.g., via some electronic probing), but only via its interface using the correct security protocol and according to the restrictions for this interface, as defined by the ATS specification.

In particular, the following exemplary alternatives A to F describe variants realizing the principles as introduced in the foregoing.

Alternative A implements an ATS with electro-mechanical (EM) spring lock mounted inside a casing. According to such embodiment, any ATS logic can be freely designed, relying on firmware and on re-usable/programmable flash memory units. Any energy needed to control ATS functions is supplied when unlocking the EM spring lock. ATS security may include crypto functionality using asymmetric cryptography, such as described by Rivest, Shamir and Adlemen (RSA), and access protected memory as needed for a sufficiently secure solution.

Fig. 4 is a schematic diagram illustrating a system according to exemplary embodiments of the present invention.

In particular, Fig. 4 illustrates an ATS with an electro-mechanic spring lock (e.g. inside a casing).

The exemplary appliance aims to detect in electronic manner broken tamper/warranty seals as an indicator if a casing has been opened in unauthorized way. In a generalized way it solves the problem to detect tampering of the protected system, assuming that all security sensitive parts of the protected system are enclosed inside a casing/housing (as valid for most telecommunication products in RAN area). Also any ATS logic (ATS logic_c and ATS logic_s, see Fig. 1) is mounted inside such casing and thus protected against unwanted physical access.

The seal is realized by a cryptographic ATS token that will be invalidated on any attempt to open the casing. This is done by ATS logic_s, which first deletes the ATS token and then releases the EM spring lock (ATS lock), which would otherwise prevent from opening the casing. When powered on, the system inside is (via ATS logic_s) able to detect an invalidated token and to react accordingly, e.g., by sending alerts or even by blocking capabilities or services. After closing, casings must be individually re-sealed via an active mechanism, which is cryptographically secured. According to this exemplary embodiment of the present invention, this is done using a digital signature and signed data (stored into ATS memory), which can only be provided by authorized services (ATS Management). This can be accomplished from external, via power and signal lines accessible from outside the closed casing.

According to this exemplary embodiment of the present invention, all components are re-usable, invalidation of ATS token can be done in an reliable and automated way, just using the same (electrical) energy source that is needed for unlocking, and no restrictions apply for the ATS logic e.g., due to constraints (characteristics) from parts that must be exchanged during an ATS life-cycle (i.e., P1 ... P5, as introduced above). Such characteristics could be determined from an economic selection for ATS devices, if these would be physically destroyed in the ATS-lifecycle P1-P5, e.g., during P2.

According to exemplary alternative A, the EM spring lock may need space inside the casing (and possibly re-design of existing casings), Further, costs of the spring lock and compatibility with products in field are to be considered.

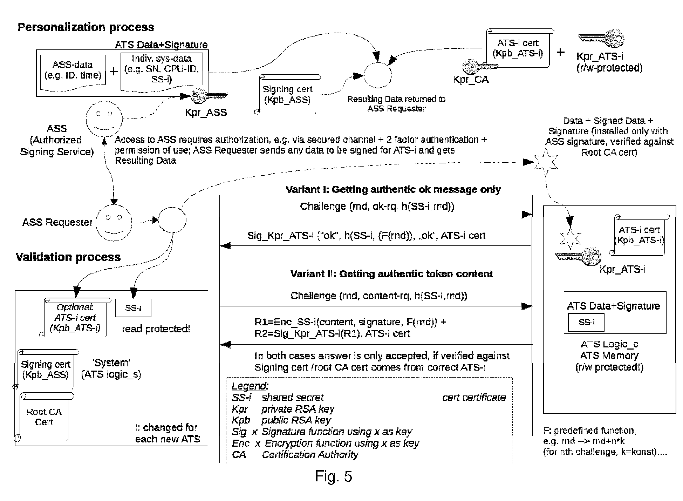

Fig. 5 is a schematic diagram illustrating a security process according to exemplary embodiments of the present invention.

In particular, Fig. 5 illustrates security for ATS personalization and validation according to exemplary embodiments of the present invention, showing a typical interworking of the ATS components (see Fig. 1), in particular regarding individualized personalization and validation processes for ATS token. In particular, Fig. 5 illustrates remote ATS signing service according to exemplary embodiments of the present invention.

The security scheme given in Fig. 5 is an example, where the authorization to create new ATS token is bound to a public key infrastructure (PKI) based remote authorized signing service (ASS), which cooperates with a local ASS requester (which can be an authorized service). The ASS requester is authorized for executing an ATS personalization process if it is successfully authenticated and connected via a secure channel (e.g., using transport layer security (TLS)). This scheme is also applicable if ASS and ASS requester are merged into one entity (e.g., a factory executing both functions locally).

It is clear to the skilled person that the implementation shown in Fig. 5 is a non-limiting example for ATS personalization and validation according to the present invention. Modifications thereof, in particular different security protocols may also be utilized as long as a comparable ATS token can be achieved.

Alternative B implements an ATS with mechanically destroyed (destroyable) ATS-token/device. Such destruction can according to exemplary embodiments of the present invention be done either by torsion or via over-bending/punching/stretching/pulling/splitting, etc. The required energy is mechanic energy coming from the opening or unplug action. ATS security is as introduced with respect to exemplary alternative A.

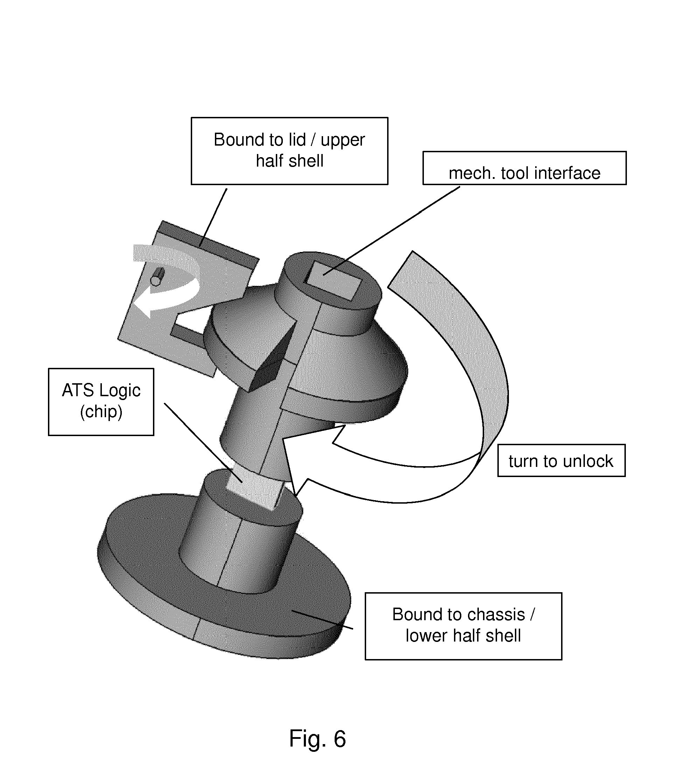

The approach according to exemplary alternative B differs from alternative A in the way the ATS token is invalidated. While alternative A benefits from using electrical energy (required to enable e.g., opening of a casing or unplugging a (specifically protected) board from a slot in backplane), here the energy directly comes from the mechanical activity applied to open a casing or housing (or unplugging a board from a slot, respectively). The underlying principle is to enforce the mechanical destruction of the ATS device via the unlocking mechanism combining them into an indivisible action. The following Figures 6 to 8 show examples how this can be applied destroying such device either by torsion or by punching/over-bending or scissoring.

Fig. 6 is a schematic diagram illustrating an apparatus according to exemplary embodiments of the present invention. In particular, Fig. 6 illustrates an appliance to mechanically destroy an ATS device by torsion (crunching/crunshing chips). According to such arrangement, everything is mounted inside a housing. For unlocking, a mechanic appliance force to turn (from external) a caddy which holds an ATS chip inside is necessary. Shear forces applied by the attacker breaks the logic, even if more stable chips are used (instead of memory films, which could be torn apart/split into several non-functional pieces). When closing the housing, a fresh ATS chip is inserted and immutably locked-in by a snap-in mechanism. Inside the caddy, the ATS is contacted in galvanic manner. According to such arrangement, very small space is needed inside a casing.

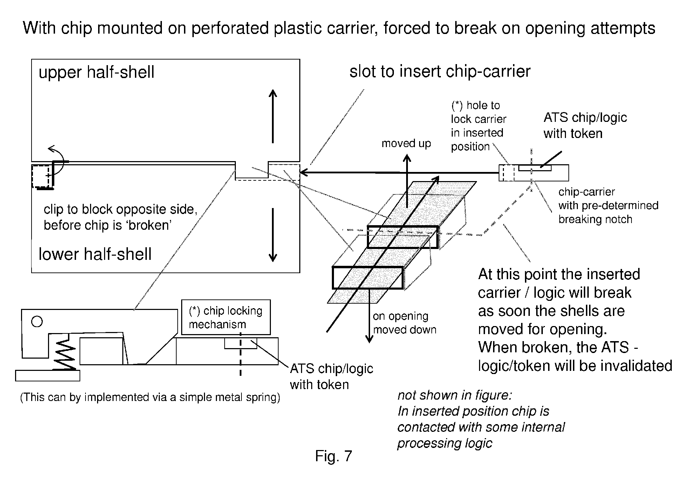

Fig. 7 is a schematic diagram illustrating a system according to exemplary embodiments of the present invention. In particular, Fig. 7 illustrates an ATS device which may, forced by an opening process, be shredded into two parts.

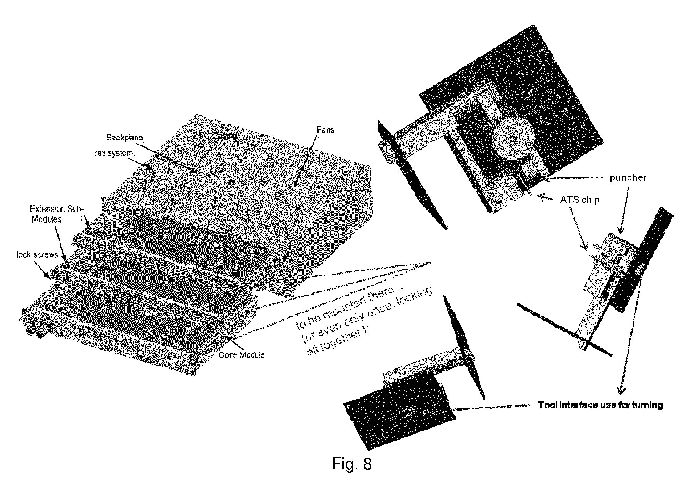

Fig. 8 is a schematic diagram illustrating a system according to exemplary embodiments of the present invention. In particular, Fig. 8 illustrates a mechanical destruction of an ATS device by means of punching or over-bending by an unlock unit.

The solutions shown realize different enforcement mechanisms, depending on the method a module (system) is enclosed inside housings. Essentially this is related to ATS lock and ATS validator components introduced in the overview drawing (Fig. 1).

It is clear to the skilled person that the implementations shown in Figures 6 to 8 are merely non-limiting examples for Alternative B, according to which the ATS token/device is mechanically destroyed (destroyable).

Alternative C implements an ATS with mechanically/electrically destroyed (destroyable) ATS-logic/device where the required energy comes from a piezo-element. Destruction can be done either via high-voltage peaks applied to power or signal lines/pins (affecting the entire device, overstressing its overvoltage protection (OVP)) or via harvested piezo-energy and a defined re-flash process (when using flash-memory). ATS security is as introduced in exemplary alternative A.

In particular, to accomplish reliable invalidation of the ATS token, a piezo(-electric) element (stack) may be used such as known from piezo ignitors, but with an adapted design and additional electronic circuits. According to exemplary embodiments of the present invention, such piezo element is taken to transform the mechanical energy applied to open a casing partly into electrical energy forming a short-lived high-voltage peak. Essentially, there are at least two options how to realize this.

Namely, a first approach directly connects the contacts of a piezo element to selected pins of the ATS device. As usually integrated circuits (IC) are overvoltage protected (OVP), typically this is guaranteed in a range >1.5kV OVP < 4kV. It is essential to design the piezo stack so that the ATS device's OVP is over-stressed. At the same time, however, suited OVP mechanisms must be applied to protect all the other electronic parts which must not be destroyed. This is a matter of design, and needs accurately to be adapted to the specific physical characteristics of ATS-devices.

Further, a second approach according to exemplary embodiments of the present invention applies energy harvesting, transforming the high-voltage peaks into an electrical charge, which is temporarily stored into a gold-capacitor (or similar). From this a voltage generator is supplied, which produces a defined voltage level over a defined period in time. The voltage generator drives a circuit that is designed to reset the content of the ATS memory (which is e.g., realized as flash-EPROM), thereby deleting (enough) data that would be needed to form a valid ATS token.

Alternative D implements (while exemplary alternatives A to C may make use of extended crypto functionality) a variant of the cryptographic mechanisms and credentials under the assumption that ICC-like memory cards without RSA unit and processor but providing some programmable read/write protection for memory access are used.

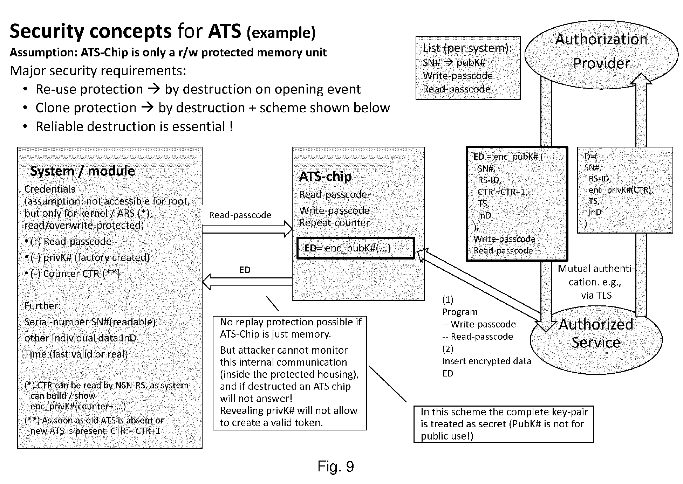

Fig. 9 is a schematic diagram illustrating a security process according to exemplary embodiments of the present invention. In particular, Fig. 9 illustrates ATS security for simple memory cards.

This exemplary approach of alternative D is adapted to properties of ATS devices when using low cost commercial off-the-shelf (COTS) ICs, such as offered by CC/SC industry. Considering the personalization and validation method explained in exemplary alternative A, it is assumed that the ATS device is equipped with a processor unit and is capable to execute RSA crypto operations, as well as symmetric cryptography.

However, such complex functionality may only be available in self-designed or expensive security ICs, such as used for smart cards, trusted platform modules (TPM), universal integrated circuit card (UICC) or similar.

The following security mechanism according to exemplary embodiments of the present invention, shown in Fig. 9, is adapted to devices similar to memory cards, which can hold only small memory content (e.g., 1024 byte) and are able to protect it against unauthorized read/write operations, but cannot provide ATS specific CPU based logic (ATS logic_c).

For such cases the security scheme given in Fig. 9 is applied according to exemplary embodiments of the present invention. A second simplification is applied to the remote signing service, which in this alternative does not need to be connected to a PKI. Instead, individual RSA key pairs (or similar asymmetric cryptography, like ECC) are used, which are not associated with certificates.

Functionally, the entity "Authorization Provider" corresponds to ASS in Fig. 5 and Authorized Service corresponds to ASS requestor in Fig. 5, but use slightly different security, respectively. The ATS chip translates to ATS device and ATS memory, referring Fig. 1. The scheme relies on factory-created (RSA) key-pairs, where the private part is pre-installed into a system and the public part never leaves the trusted environment, where it has been created in. Actually, the public part is treated as a secret.

This allows cooperation with remote services (example used in Figure: Authorized Service), which are authorized to connect to an ASS, but cannot create an ATS token on their own. This allows controlling the trustworthiness of services once assigned credential are suspected to be used in fraudulent manner (e.g., due to identity masquerading, based on compromised credentials).

By using time stamps and monotone counters, re-use attacks of old material (in Figure: ED=encrypted data) is prevented, as new ATS token are expected to contain newer data. This can not be created, as an authorized RS = ASS requester is not in possession of the so-called public (but actually secret) encryption key.

It is clear to the skilled person that the implementation shown in Fig. 9 is a non-limiting example for security concepts for memory cards according to the present invention, and that equivalent modifications thereof may also be utilized.

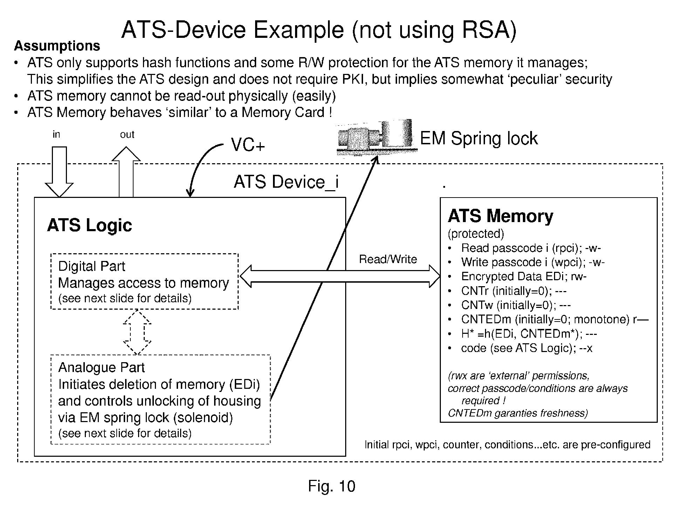

Fig. 10 is a schematic diagram illustrating an apparatus according to exemplary embodiments of the present invention. In particular, in Fig. 10, details for an implementation of an ATS device without capabilities of crypto operations as discussed referring to Fig. 9 are given.

Following assumptions are made for an implementation according to Fig. 10. Namely, the ATS supports only hash functions and some read/write protection for the ATS memory it manages. Thereby the ATS design is simplified and PKI is not required. Further, ATS memory can not be (easily) read out physically. In addition, the behaviour of the ATS memory is similar to a memory card.

Alternative E is based on RFID elements. Similar to exemplary alternative B, it relies on mechanically destructed ATS token/devices. Security mechanisms are aligned to the mechanisms and protocols provided by a specific RFID device.

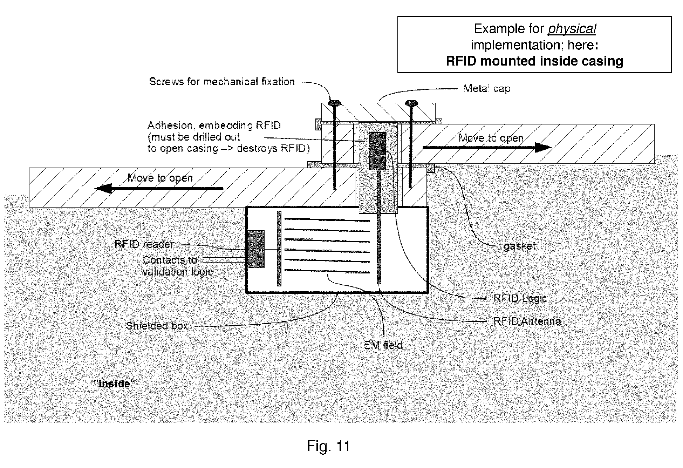

Fig. 11 is a schematic diagram illustrating a system according to exemplary embodiments of the present invention. In particular, Fig. 11 illustrates RFID based ATS with mechanical destruction.

According to such exemplary embodiments of the present invention, use is made of RFID technology. This is mainly to profit from commercial RFID devices. Also, this is useful to avoid galvanic contacted ATS devices, where this might not be desired or possible, e.g., due to corrosion in humid or wet environments, or to gain solutions which are more robust regarding vibration.

Moreover, extending Fig. 11, RFID would enable solutions where validation of seals should be possible from both sides of a casing.

For such application the metal cap could be substituted by a material that does not shield radiation (e.g., glass, plastic) and has antenna paddles to receive energy and to transmit data also to an external RFID reader device. Still, such solution would be completely shielding (IP and radiation) the internal system inside the box, because it is mounted in a shielded box itself. Applied security protocols need to be compliant to existing RFID technology, which can be adapted accordingly.

The ATS security needs to be designed in dependence of the selected RFID devices, which offer a variety of partly proprietary security mechanisms.

Alternative F implements an (own-created) ATS in cooperation with mechanical seal.

Namely, according to exemplary embodiments of the present invention, a mixture of available pure mechanical seals (stickers that show e.g. 'Warranty void' when the top layer is pulled off) and printed electronics inside is envisaged. The sticker according to exemplary embodiments of the present invention has some areas with galvanic interfaces.

Peeling off the top layer breaks the electronics securely, as some parts of the electronics is glued to the top layer, and other parts of the electronics is glued to the lower layer.

An advantage of this solution is that the device should break immediately when the top layer is broken, in contradiction with other devices where it is tried to protect devices against bending, torsion, high-voltage peaks etc.

Above-described functions may be implemented by respective functional elements, processors, or the like, as described below.

In the foregoing exemplary description of the devices, only the units that are relevant for understanding the principles of the invention have been described using functional blocks. The devices may comprise further units that are necessary for its respective operation. However, a description of these units is omitted in this document. The arrangement of the functional blocks of the devices is not construed to limit the invention, and the functions may be performed by one block or further split into sub-blocks.

When in the foregoing description it is stated that the apparatus (or some other means) is configured to perform some function, this may, where applicable, be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

For the purpose of the present invention as described herein above, it should be noted that
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- a means may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In view of the above, there are provided measures for hardware integrity protection. Such measures exemplarily comprise providing a protection device, comprising holding means configured to hold two separable components and to release said two separable components, and storing means configured to store information indicative of validity of said device, wherein said holding means is configured to, upon releasing said two separable components, irreversibly neutralize said information.

Even though the invention is described above with reference to the examples according to the accompanying drawings, it is to be understood that the invention is not restricted thereto. Rather, it is apparent to those skilled in the art that the present invention can be modified in many ways without departing from the scope of the inventive idea as disclosed herein.

### List of acronyms and abbreviations

- 3GPP: Third Generation Partnership Project
- ASS: authorized signing service
- ATS: active tamper seal
- ATS token: Protected data, which is stored in ATS memory; ATS token need authorization for being created.
- ATS management: any processes and equipment needed to manage the ATS approach and to put it into operation; typically ATS management is not part of the protected system
- ATS memory: protected memory is part of an ATS device
- ATS logic: logic to manage ATS token and memory; ATS logic can partly belong to the system (logic_s) and partly to the ATS device (logic_c)
- ATS device: integrated circuit (IC) holding ATS memory and ATS logic_c
- CC/SC: chip card/smart card
- C&R: challenge & response protocol
- COTS: commercial off-the-shelf
- DSL: digital subscriber line
- ECC: elliptic curve cryptography
- EM: electromagnetic/electromechanical (depending on context)
- eNB: evolved Node B (3GPP term for a base transceiving station)
- FIPS-140: Federal Information Processing Standards (document number 140)
- GPS: Global Positioning System
- H(e)NB: Home(e)NB (3GPP term for Home eNB)
- HSM: hardware security module
- HW: hardware
- IC: integrated circuit
- ICC: integrated circuit cards
- IP: intrusion protection
- LTE: Long Term Evolution
- NE: network element
- OAM: operations and maintenance
- OV: overvoltage
- OVP: overvoltage protection
- PKI: public key infrastructure
- PS: ATS protected system
- RAN: radio access network
- RFID: radio frequency identification
- RSA: Rivest, Shamir und Adleman
- TLS: transport layer security
- TPM: trusted platform module
- TS: technical specification
- UE: user equipment
- UICC: universal integrated circuit card

## Claims

1. A protection device, comprising
holding means configured to hold two separable components and to release said two separable components, and
storing means configured to store information indicative of validity of said protection device,
wherein said holding means is configured to, upon releasing said two separable components, irreversibly neutralize said information.

2. The protection device according to claim 1, wherein
said information is furnished with a security signature.

3. The protection device according to claim 1 or 2, wherein
said information is cryptographically protected.

4. The protection device according to any of claims 1 to 3, wherein
said validity of said protection device is restorable by installing new information indicative of said validity.

5. The protection device according to any of claims 1 to 4, wherein
said information indicative of said validity is generated by an authorized entity using secret data.

6. The protection device according to any of claims 1 to 5, further comprising
communicating means configured to communicate data based on said information.

7. The protection device according to any of claims 1 to 6, wherein said holding means comprises
a movable engaging portion,
an engagement counterpart portion,
an electric supply contact configured to receive electric energy,
an unlock means configured to, upon receipt of said electric energy, move said engaging portion to disengage from said engagement counterpart portion, and
a resetting means configured to move said engaging portion to engage with said engagement counterpart portion.

8. The protection device according to claim 7, wherein
said holding means is configured to delete said information using said received electric energy.

9. The protection device according to claim 8, wherein
said holding means is configured to delete said information before disengaging said engagement portion from said engagement counterpart portion.

10. The protection device according to any of claims 1 to 6, wherein said holding means comprises
a first portion configured to support said storing means, and
a second portion movable with respect to said first portion and capable of contacting said storing means.

11. The protection device according to claim 10, wherein
said first portion, said second portion, and said storing means are arranged such that upon movement of said second portion with respect to said first portion said storing means is mechanically destroyed.

12. The protection device according to claim 11, wherein
said storing means is mechanically destroyed by means of at least one of torsion of said storing means, over-bending said storing means, punching said storing means, stretching said storing means, pulling said storing means, splitting said storing means, and scissoring said storing means.

13. The protection device according to any of claims 10 to 12, wherein
said first portion and second portion are bound to said two separate components, respectively.

14. The protection device according to any of claims 10 to 13, wherein
said storing means is a radio frequency identification logic.

15. The protection device according to any of claims 10 to 13, wherein
said first portion is a bottom layer of a sticker, said second portion is a top layer of said sticker, and wherein
a first part of said memory portion is glued to the bottom layer, and
a second part of said memory is glued to the top layer.

16. The protection device according to any of claims 1 to 6, wherein
said holding means further comprises a piezo-electric element configured to, upon releasing said two separable components, generate electric energy.

17. The protection device according to claim 16, wherein
said holding means is further configured to conduct said generated electric energy to said storing means, and
said storing means is electrically destructable by said generated electric energy.

18. The protection device according to claim 16, wherein said holding means further comprises
an energy storage configured to store said generated electric energy, and
a controller configured to generate a predetermined voltage utilizing said stored electric energy, and wherein
said holding means is configured to delete said information using said predetermined voltage.

19. A protection system, comprising
a protected element,
a protection device according to any of claims 1 to 18, and
said two separable components configured to cover said protected element in an unseparated state and to uncover said protected element in a separated state.

20. The protection system according to claim 19, wherein said protected element comprises a validation means configured to
communicate with said protection device,
to detect tampering of said protection device based on said communication, and
to control security reactions upon detection of said tampering.

21. The protection system according to claim 20, further comprising
a reporting means configured to report said detection of said tampering.

22. The protection system according to any of claims 19 to 21, wherein
said two separable components are a casing and a casing door, respectively, and said protected element is arranged within said casing, or
said two separable components are a rack and a slide-in module, respectively, and said protected element is arranged on said slide-in module.
